# EUROPEAN PATENT SPECIFICATION

(11) **EP 4 258 439 B1**
(45) Date of publication and mention of the grant of the patent: **07.05.2025**
(21) Application number: 22865041.2
(22) Date of filing: 31.08.2022
(51) Int. Cl.: H01M 50/204, B29C 37/02, B29C 71/00, B25J 9/06, B25J 11/00, B65H 41/00, B08B 1/16, H01M 10/653, B08B 1/50

(54) **AUTOMATIC REMOVAL SYSTEM FOR TAPE AND RESIN OF BATTERY MODULE**
AUTOMATISCHES ENTFERNUNGSSYSTEM FÜR BAND UND HARZ EINES BATTERIEMODULS
SYSTÈME D'ÉLIMINATION AUTOMATIQUE DE RUBAN ET DE RÉSINE DE MODULE DE BATTERIE

(30) Priority: 02.09.2021 KR 20210117211
(43) Date of publication of application: 11.10.2023
(73) Proprietor: LG Energy Solution, Ltd., Seoul 07335 (KR)
(72) Inventor: LEE, Chang Hyun, Daejeon 34122 (KR)
(74) Representative: Plasseraud IP
(86) International application number: PCT/KR2022/013035
(87) International publication number: WO 2023/033539

(56) References cited:
- CN-A- 112 170 385
- CN-B- 106 784 964
- JP-A- 2000 269 168
- JP-A- 2020 173 981
- JP-U- H0 556 856
- KR-B1- 102 208 159
- US-A1- 2014 017 352

## Description

### [Technical Field]

The present invention relates to an automatic removal system for automatically removing a tape and a resin of a battery module.

This application claims the benefit of priority based on Korean Patent Application No. 10-2021-0117211, filed on September 02, 2021.

### [Background Art]

A battery module is formed by stacking a plurality of battery cells, and an exterior thereof is covered by a casing. In order to prevent the temperature inside the casing from rising in a manufacturing process of the battery module, fix the cells in place, and protect the cells, a liquid resin as a heat dissipation member may be injected into a space inside a pack to compactly fill the pack. In order to check whether the resin is fully hardened in a state of being completely filled inside the pack, a plurality of check holes are formed in a line on an outside of the casing, and a tape, which is an attachment member for covering the check holes, is attached to the casing. Openings are perforated in the tape at positions corresponding to the check holes. When the resin is filled in the pack to completely occupy the space and hardened, a protruding portion is formed through the check hole and the opening of the tape.

When the tape attached to the casing of the battery module is removed (primary removal) in a test process, a portion of the resin protruding through the opening of the tape is removed together with the tape, but a portion of the resin protruding outward through the check hole still remains and thus is removed (secondary removal) with a knife, which is a removal device. Then, an outer surface of the casing is cleaned to be flat, so that an exterior of the casing is smoothly finished.

However, in the present process, each of two operators performs tape removal, resin removal, and visual inspection. As described above, there are problems in that two operators are required, each operator has a different removal process speed, and efforts are required to remove the tape and the resin.

In order to solve the above problems, the inventor has developed an automatic removal system for automatically removing a tape and a resin of a battery module, which automatically removes the tape and the resin using a multi-axis automatic robot.

### [Prior-Art Documents]

Further prior art is disclosed in KR 10-2021-0056824 A, JP 2000-269168 A, JP 2020-173981 A, KR 102 208 159 B1, CN 112 170 385 A and US 2014/017352 A.

### [Disclosure]

### [Technical Problem]

The present invention has been devised to solve the above problems, and the present invention is directed to providing an automatic removal system for automatically removing a tape and a resin of a battery module, having a new structure capable of automatically, quickly, and reliably removing the tape and the resin exposed to the outside of the battery module, increasing production yield, and reducing costs by reducing man-hours.

### [Technical Solution]

According to an aspect of the present invention, this object is accomplished by an automatic removal system for automatically removing a tape and a resin exposed to an outside of a battery module comprising the features of patent claim 1.

Dependent claims are directed on features of preferred embodiments of the invention.

### [Advantageous Effects]

According to the present invention, a tape and a resin of a battery module can be automatically removed using an automatic multi-axis robot, so that an operation is fast and accurate, and an operation speed can be significantly increased.

An automatic multi-axis robot of the present invention can freely pivot, bend, and move in parallel, and thus, by attaching a device for removing a tape and a resin of a battery module, the tape and resin of the battery module can be removed in various ways, so that adaptability according to the work environment is excellent and compatibility is also excellent.

The automatic removal system of the present invention is unmanned equipment, and thus can reduce man-hours and labor costs according to the reduced man-hours, and can be economical and cost-saving.

### [Brief Description of the Drawings]

FIG. 1 is a configuration diagram of an automatic removal system for automatically removing a tape and a resin of a battery module according to the present invention.
FIG. 2 is a view illustrating an example in which the automatic removal system of the present invention according to FIG. 1 is implemented.
FIG. 3 is a perspective view of an automatic multi-axis robot of the present invention.
FIG. 4 is a perspective view of a removal assembly of the present invention.
FIG. 5 is a perspective view of a removal assembly according to another embodiment of the present invention.
FIG. 6 is a perspective view illustrating a transfer shuttle, an aligner, a blowing module, and a cleaning device of the present invention.
FIG. 7 is a view for describing an overview of a tape and resin removal operation process using the automatic multi-axis robot of the present invention.
FIG. 8 is a view illustrating an actual example in which an upper surface of a casing is completely cleaned using the automatic multi-axis robot and the removal assembly of the present invention.

### [Detailed Description of the Preferred Embodiments]

Hereinafter, the present invention will be described in detail.

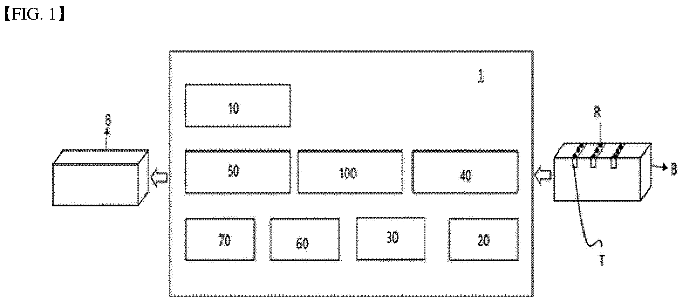

FIG. 1 is a configuration diagram of an automatic removal system 1 for removing a tape and a resin of a battery module B according to the present invention. A tape T is presented as an example of an attachment member, a resin R is presented as an example of a heat dissipation member, and other members that achieve the same function are also applicable. These terms do not limit the scope of the present invention.

The automatic removal system 1 of the present invention includes a controller 100 serving as a main control unit (MCU) of the entire system, an automatic multi-axis robot 10, a transfer shuttle 20, an aligner 30, a transfer module 40, a removal assembly 50, a blowing module 60, and a cleaning device 70. These members are connected to the controller 100 in a wired or wireless manner and driven by a signal of the controller 100.

The battery module B moved by the transfer module 40 moves along the transfer shuttle 20 to be fixed in place in the aligner 30, and the tape T and the resin R are removed by driving the removal assembly 50 coupled to the automatic multi-axis robot 10. The removal assembly 50 is cleaned by the cleaning device 70, the tape T is collected in a collector (not shown in FIG. 1), the battery module B, after being cleaned, moves for another operation, and the automatic multi-axis robot 10 returns to its original position and then waits for the supply of a next battery module B.

According to the present invention, a large amount of tapes T and resins R of the battery module B may be removed quickly and reliably by repeating the above automatic removal operation cycle.

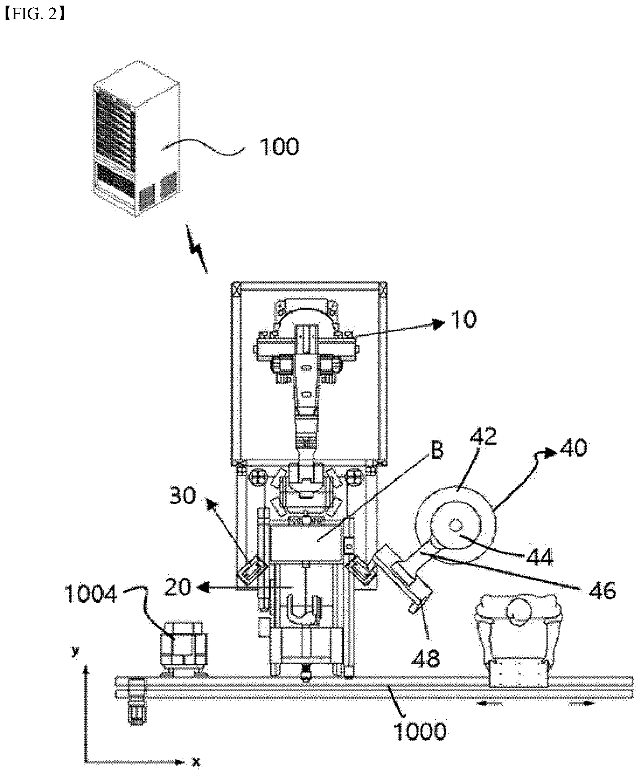

FIG. 2 illustrates an example in which the automatic removal system 1 of the present invention according to FIG. 1 is implemented. Illustration and description of a motor, a pneumatic actuator, a cylinder, a cable, and the like, which are members naturally provided in a conventional automatic process system, will be omitted in the following description except in special cases so that the present invention is clearly understood.

The battery module B in which processes of stacking battery cells, injecting the resin R, and attaching the tape T are completed moves from an unloader 1004 to a conveyor 1000 and moves along an x-axis direction. The conveyor 1000 is disposed long along the x-axis direction, and the automatic multi-axis robot 10, the transfer shuttle 20, and the aligner 30 are generally arranged along a y-axis direction that is perpendicular to the x-axis direction. The unloader 1004 and the conveyor 1000, and the movement of the battery module B according to the unloader 1004 and the conveyor 1000 are illustrated based on the present process system, and may be modified in various ways, such as supplying the battery module B directly to a front side of the transfer shuttle 20.

The transfer module 40 is installed adjacent to the conveyor 1000 and the transfer shuttle 20. The transfer module 40 includes a fixed stand 42 positioned at a lower portion thereof, a pivot body 44 which is installed on the fixed stand 42 and horizontally rotatable and in which an MCU is embedded, and an extension arm 46 which extends long from one side of the pivot body 44 and is vertically and horizontally rotatable. A battery gripper 48, which is heavy and has a tong shape, is installed at a front-side end of the extension arm 46. Grippers of the battery gripper 48 are pivotable between a grip position at which the grippers rotate so that front ends thereof are close to each other and firmly grip the battery module B, and a non-grip position at which the grippers rotate so that the front ends thereof are spaced apart from each other and are separated from the battery module B.

When a battery position detection sensor (not shown in FIG. 2) detects that the battery module B has arrived at a predetermined position of the conveyor 1000, the extension arm 46 pivots downward by a predetermined angle to face both side surfaces of the battery module B, the battery gripper 48 moves inward toward the side surfaces of the battery module B and presses the side surfaces, and this position is the grip position. In this state, the extension arm 46 rotates upward, and the pivot body 44 revolves toward the transfer shuttle 20, and then, the extension arm 46 rotates downward to place the battery module B on the transfer shuttle 20. When the transfer process of the battery module B is completed in this manner, the battery gripper 48 may be switched to the non-grip position.

An example of the transfer module 40 has been described above, and a device of any structure may be appropriately employed as along as it performs a function capable of moving the battery module B from the conveyor 1000 to the aligner 30. An application target of the transfer module 40 is not limited, for example, the transfer module 40 is also applicable to the battery module B transferred by being loaded on a rotary turntable instead of the conveyor 1000.

Next, before describing the structure of the transfer shuttle 20 and the aligner 30, the automatic multi-axis robot 10 and the removal assembly 50 of the present invention will be described first.

In the automatic removal system 1, the automatic multi-axis robot 10 is spaced apart from a platform 200, on which other members are installed, to secure a sufficient working space.

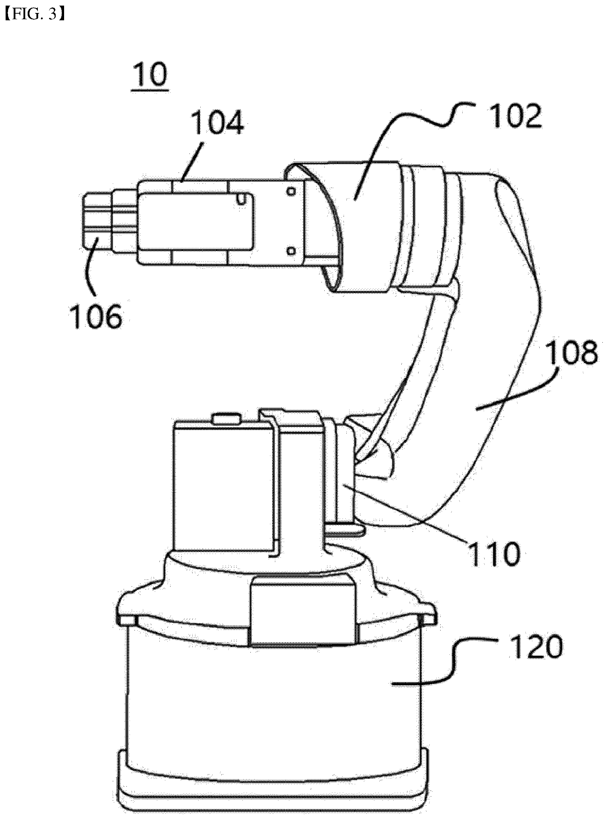

As shown in FIG. 3, the automatic multi-axis robot 10 of the present invention has a multi-joint structure including a body 120, a first robot arm 108 connected to the body 120 through a boss 110 and extending upward, and a second robot arm 102 extending horizontally from an end of the first robot arm 108. A pivotable drive arm 104 is coupled to a front end of the second robot arm 102, and a coupling portion 106 coupled to the removal assembly 50 is formed at a front end of the drive arm 104. An MCU is embedded in the body 120 and communicates with the controller 100. The first robot arm 108 freely rotates in a three-dimensional space to set default vertical and horizontal positions, and the second robot arm 102 performs rotational and bending movements. The drive arm 104 is connected to a spindle of the second robot arm 102, and bends and pivots independently.

An example of the automatic multi-axis robot 10 has been described above, and the structure of the automatic multi-axis robot 10 may be appropriately changed according to a work environment. For example, the coupling portion 106 may be manufactured as a finger type or the arm may be used as an independent arm that performs other functions, and the automatic multi-axis robot 10 of a compact structure may be integrated into the platform 200.

The coupling portion 106 of the automatic multi-axis robot 10 is coupled to the removal assembly 50, and the latter freely moves, pivots, and performs rotation and joint movements due to the driving of the former.

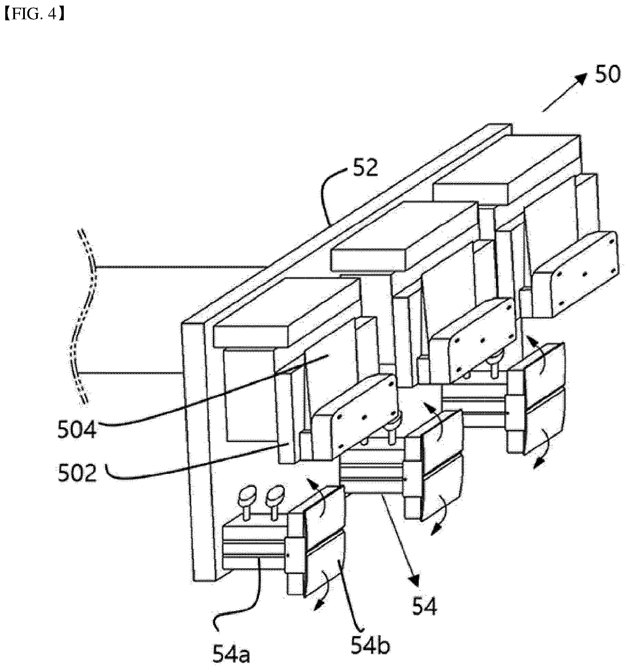

As shown in FIG. 4, the removal assembly 50 of the present invention includes a base 52 having a flat plate shape, and first removal devices 54 including rods 54a arranged side by side along one side of a lower surface of the base 52 and each extending downward vertically and grippers 54b each formed integrally with a front end of the rod 54a and having a tong shape. A front surface of the base 52 is coupled to the coupling portion 106 of the drive arm 104 of the automatic multi-axis robot 10.

Similar to the battery gripper 48, the grippers 54b are pivotable between a grip position at which grippers thereof rotate so that front ends thereof are close to each other and firmly grip the tape T, and a non-grip position at which the grippers rotate so that the front ends thereof are spaced from each other and are separated from the tape T.

The gripper 54b may be modified in various ways, for example, the gripper 54b may take the form of a pad having a flat plate shape and a mesh structure or embossing to which the tape T can be attached.

A plurality of support brackets 502 are installed side by side in a side opposite to one side, in which the first removal devices 54 are arranged, and a second removal device 504 serving as a knife for removing the resin R is mounted to an inlet portion of each of the support brackets 502.

An example of the structure and operation of the removal assembly 50 has been described above, and it is obvious that the following modifications are possible.

First, the size and number of the first and second removal devices 54 and 504 may be variously changed according to the size of the battery module B, and the alignment positions and number of check holes, for example, when the tapes T are arranged only in a line in the battery module B, only one of the first and second removal devices 54 and 504 is installed. In this regard, it is preferable that the removal assembly 50 of the present invention be of an exchangeable type detachable to the automatic multi-axis robot 10 so that the removal assembly 50 is conveniently changed and maintained.

Second, in many practical cases, the tape T and the resin R may be completely removed by the first removal operation, and in this case, which is not part of the claimed invention, the second removal step, with the device 504, may be omitted.

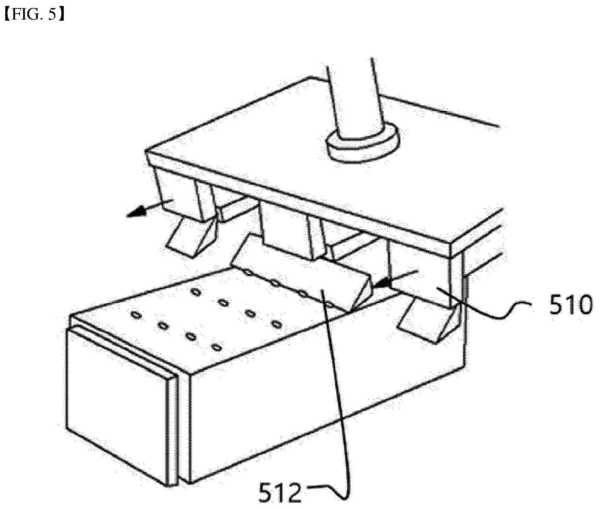

FIG. 5 illustrates a perspective view of a second embodiment of the second removal device.

A plurality of blocks 510 are installed in one side of a lower surface of the base 52 in a direction perpendicular to the lower surface, and a scraper 512 is mounted on a lower surface of each of the blocks 510. The scraper 512 is configured to come into contact with most of an upper surface of a casing of the battery module B in left and right directions so that the removal assembly 50 moves along a longitudinal side of the casing, i.e., a length direction, so that the removal assembly 50 may clean all the material protruding above the upper surface of the casing while moving in parallel on the casing.

An operation, which is not part of the claimed invention, of simultaneously removing the tape T and the resin R by applying the same force while being simultaneously in close contact with the tape T and the resin R may be sequentially performed with respect to a plurality of columns of the tapes T attached along a width direction of the casing, whereby operation time can be further reduced as compared to the method of the present invention.

The block 510 and scraper 512 of this embodiment may be modified in various ways. According to the present invention, the block 510 and scraper 512 of the second removal device of the second embodiment may be replaced with the second removal device 504 of the first embodiment in the removal assembly 50 of the first embodiment.

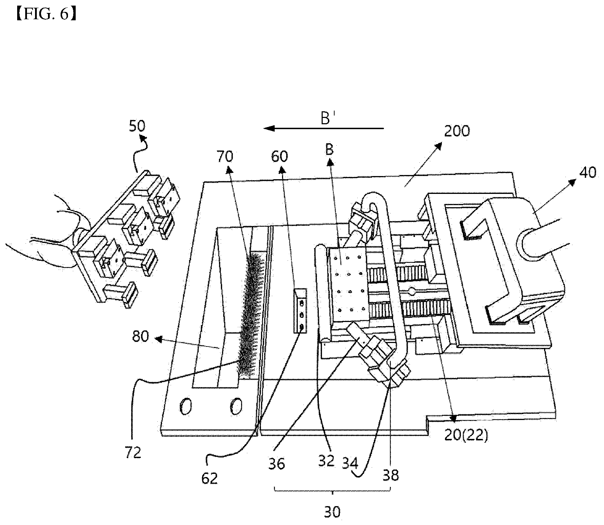

Next, the transfer shuttle 20, the aligner 30, the blowing module 60, and the cleaning device 70 of the present invention will be described with reference to a perspective view of FIG. 6.

The transfer shuttle 20 of the present invention includes a pair of transfer rails 22 which extend long and are adjacent to each other. That is, the transfer shuttle 20 has a belt structure similar to the conveyor. The width of the transfer rail 22 is manufactured to sufficiently support the length of the battery module B. The transfer module 40 places the battery module B on the transfer rail 22 so that the battery module B is exactly perpendicular to a moving direction of the transfer rail 22. The placed battery module B is moved forward along the transfer rail 22 and supplied to the aligner 30.

The aligner 30 of the present invention includes a stopper 32 positioned on a front side thereof and a pair of cylinder actuators 34 as pressing means each installed on an outer side of each of the transfer rails 22.

The stopper 32 is installed at a predetermined position above the platform 200 to protrude long in a width direction and prevents the battery module B from moving forward further.

Each of the cylinder actuator 34 includes a pressing rod 36 that enters an inside of the transfer rail 22 or retracts from the transfer rail 22 by the driving of a piston inside the body. The pressing rods 36 may enter or retract in an inclined direction with respect to the transfer rail 22 to press both corners of a side surface or a rear surface of the battery module B from behind the battery module B. The left and right cylinder actuators 34 may be connected to each other by a bridge 38 to operate simultaneously in real time.

In the present invention, the stopper 32 in the front side and two pressing rods 36, which enter the transfer rail 22, should firmly hold both front and rear side surfaces of the battery module B, respectively, to stably fix the position of the battery module B, so that the battery module B does not shake or move finely during the removal operation. Accordingly, a distance between the stopper 32 and the pressing rod 36 is determined according to the width of the battery module B.

The blowing module 60 of the present invention includes a plurality of spray nozzles 62 arranged to spray high-pressure air. An opening of the spray nozzle 62 is directed upward, and compressed air discharged from the spray nozzle 62 flows upward from below at a front surface of the battery module B, so that a portion of the tape T is separated from the casing and directed upward. This operation helps the gripper 54b of the removal assembly 50 to grip the tape T.

The cleaning device 70 of the present invention includes a cleaner 72, and for example, the cleaner 72 is made of a flexible material having a brush or brush structure formed on an outer surface thereof and manufactured in, for example, a roller shape so that resin attached to the knife or scraper that is the second removal device is removed. The removal assembly 50 may come into contact with the cleaner 72 while reciprocating to remove the resin, or the cleaner 72 may rotate in a state in which the removal assembly 50 is fixed. In addition, the cleaning device 70 may be modified in various ways as long as it achieves the same purpose, for example, the cleaning device 70 may be replaced with a nozzle that blows out high-pressure air.

A collector 80 is installed in a front side of the cleaning device 70 along a height direction of the platform 200. The tape T gripped by the first removal device 54 falls and is collected in the collector 80. The collector 80 may have a box shape and may be mounted on the platform 200 to be replaceable.

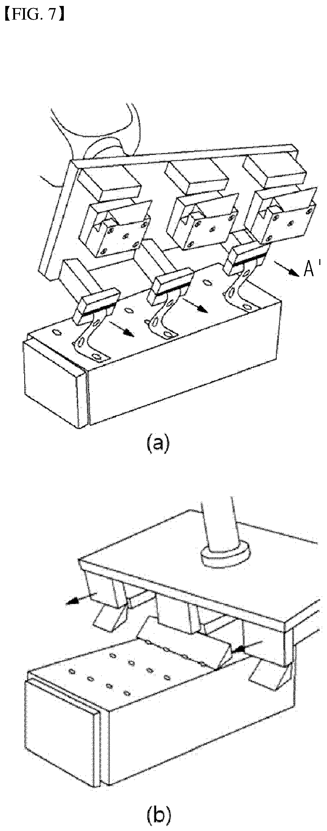

Next, a removal operation will be described with mainly reference to the automatic multi-axis robot 10 and the removal assembly 50 in the automatic removal system 1 of the present invention described above with reference to FIGS. 6 and 7.

On the upper surface of the casing of the base module B, the tapes T are attached in three rows along the width direction, and accordingly, three first removal devices 54 and three second removal devices 504 are mounted. When the MCU of the automatic multi-axis robot 10 is driven by a signal of the controller 100, the removal assembly 50 may rotate clockwise or counterclockwise or move forward or backward along the y-axis direction, according to the drive arm 104.

The removal assembly 50 is placed adjacent to a front upper surface of the battery module B such that the base 52 is substantially perpendicular to the upper surface of the battery module, and the grippers 54b are placed adjacent to the tape T to face the tape T, and then, the removal assembly 50 rotates to position the tape T in a space between the grippers 54b. When the gripper 54b is switched to the grip position to close the space, the tape T is gripped, and when the removal assembly 50 is rotated in the counterclockwise direction, the gripped tape T is picked and lifted from an outer surface of the casing. When the removal assembly 50 moves in parallel in a direction A', as the tape T is gradually separated, the tape T and the resin R attached thereto are removed together. The operation of gripping the tape T is more easily performed by the blowing of the spray nozzle 62. This operation state is illustrated in FIG. 7A.

In this state, when the removal assembly 50 moves to the collector 80 along a direction B' and then opens the gripper 54b to a non-grip state, the tape T is automatically dropped by gravity and collected in the box.

In addition, in order to completely remove the resin R remaining on the upper surface of the casing, the automatic multi-axis robot 10 is driven to rotate the removal assembly 50 in a vertical direction, so that the second removal device 504 is now positioned to be brought into contact with the upper surface of the casing in a length direction of the battery module B, and then the automatic multi-axis robot 10 is driven to linearly move the removal assembly 50 along the length direction. This operation state is illustrated in FIG. 7B. Through this process, the resin R remaining in the casing is removed.

Thereafter, the automatic multi-axis robot 10 is driven to rotate the removal assembly 50 in the vertical direction, and then, the automatic multi-axis robot 10 is driven to move the removal assembly 50 again along the direction B' to bring the removal assembly 50 into contact with the cleaner 72 and remove the resin R attached to the second removal device 504.

Alternatively, unlike FIG. 7B, a modification is also possible in which, in a state in which the tape T is removed, the removal assembly 50 rotates slowly in the clockwise direction in contrast to the previous case and is positioned so that a front end of the knife, which is the second removal device 504, comes into contact with the upper surface of the casing, and then, moves in parallel in the direction B' to remove the remaining resin R.

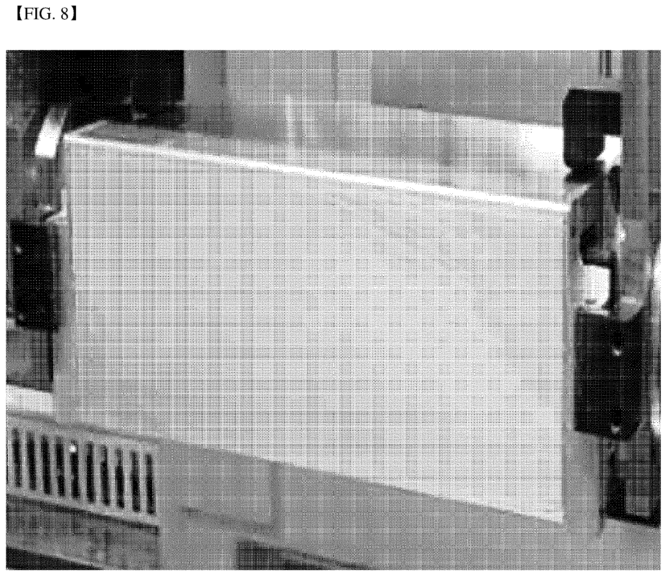

FIG. 8 illustrates an actual example in which the upper surface of the casing is completely cleaned using the automatic multi-axis robot 10 and the removal assembly 50 of the present invention.

According to the present invention, as described above, the tape T and the resin R can be reliably and quickly removed by various methods based on free pivoting and moving motions of the automatic multi-axis robot 10.

When both the tape T and the resin R of the battery module B are removed by the above process, the automatic multi-axis robot 10 returns to its initial position. As the pressing rod 36 of the cylinder actuator 34 moves away from a region of the transfer rail 22 by retracting therefrom, the fixed state of the battery module B is released, and the battery module B is moved linearly along the opposite direction by the rotation of the transfer rail 22 and is transferred to a place at which the transfer module 40 is placed. The transfer module 40 operates in an order opposite to that described with reference to FIG. 2 to place the battery module B on the conveyor 1000 again, and the battery module B is transferred to a subsequent operation process along the conveyor 1000.

An example of the finishing process has been described above, and various modifications are possible, for example, the battery module B from which the tape T and the resin R are removed is directly moved from the aligner 30 to an adjacent work bench using an automatic arm (not shown).

The above description is only an example of the present invention, and it will be understood by those of skilled in the art that various changes in form and details may be made without departing from the scope of the appended claims.

### [Description of Reference Numerals]

1: automatic removal system for automatically removing tape and resin
10: automatic multi-axis robot
20: transfer shuttle
30: aligner
40: transfer module
50: removal assembly
60: blowing module
70: cleaning device
B: battery module
T: tape
R: resin

## Claims

1. An automatic removal system (1) for automatically removing a tape (T) and a resin (R) exposed to an outside of a battery module (B), the system (1) comprising:
a removal assembly (50) including a removal device (54, 504) for removing the tape (T) and the resin (R); and
an automatic multi-axis robot (10) coupled to the removal assembly (50) and configured to drive the removal assembly (50) to remove the tape (T) and the resin (R) of the battery module (B),
wherein the removal assembly (50) includes a first removal device (54) for removing the tape (T) and the resin (R) attached to the tape (T),
wherein the removal assembly (50) further includes a second removal device (504) for removing the resin (R) remaining on the battery module (B) left by the first removal device (54),
**characterized in that**
the first removal device (54) includes rods (54a) arranged side by side along one side of a base (52) of the removal assembly (50) and each of the rods (54a) extending downward, and a gripper (54b) integrally formed at a front end of each of the rods (54a), and
the second removal device (504) includes a support bracket (502) or block (510) formed on a second side of the removal device opposite to a first side in which the first removal device (54) is arranged, and a knife or scraper (512) installed on the support bracket (502) or block (510) to remove the resin (R).

2. The system (1) of claim 1, further comprising a transfer module (40) and a transfer shuttle (20),
wherein the transfer module (40) is configured to grip the battery module (B) and to move it to the transfer shuttle (20).

3. The system (1) of claim 2, wherein the transfer shuttle (20) includes a pair of transfer rails (22) that are adjacent to each other, and
wherein the system further comprises an aligner (30) positioned in a front side of the transfer rail (22), such that in use, the battery module (B) moved by the transfer module (40) to the transfer shuttle (20), is loaded on the pair of transfer rails (22) and is moved to the aligner (30).

4. The system (1) of claim 3, wherein the aligner (30) includes a stopper (32), and a pair of pressers (34) respectively installed on outer sides of the pair of transfer rails (22),
wherein each of the pressers (34) includes a pressing rod (36) configured to enter an inside of a respective transfer rail (22) or to retract from the respective transfer rail (22),
such that in use, the pressing rod (36) presses a side surface or a rear surface of the battery module (B) when the pressing rod (36) enters the inside of the respective transfer rail (22), and
the stopper (32) blocks a forward movement of the battery module (B), so that the battery module (B) is fixed in place.

5. The system of claim 1, further comprising spray nozzles (62) arranged to spray high-pressure air, such that in use, compressed air discharged from the spray nozzles (62) causes a portion of the tape (T) to be separated from a casing of the battery module (B) and directed in a predetermined direction, so that the first removal device (54) of the removal assembly (50) grips the tape (T).

6. The system (1) of claim 1, further comprising a cleaner (72) configured to contact the second removal device (504) and remove the remaining resin (R) adhered to the second removal device (504).

7. The system (1) of claim 1, further comprising a collector (80) configured to collect the tape (T) attached to the first removal device (54).

8. The system (1) of claim 1, wherein the first removal device (54) includes blocks (510) arranged along one side of a base (52) of the removal assembly (50) to face a lower surface, and a scraper (512) mounted on a lower surface of the blocks (510) and configured to remove the tape (T) and the resin (R).

9. The system (1) of claim 1, wherein the automatic multi-axis robot (10) has a multi-joint structure including a body (120), a first robot arm (108) connected to the body (120), and a second robot arm (102) connected to the first robot arm (108), wherein a pivotable drive arm (104) and a coupling portion (106) for being coupled to a base (52) of the removal assembly (50) are sequentially formed at a front end of the second robot arm (102).

10. A method of automatically removing tape (T) and resin (R) exposed to the outside of a battery module (B) using the automatic removal system (1) of claim 1, the method comprising:
- removing the tape (T) and the resin (R) attached to the tape (T) by moving the first removal device (54) along a first direction of the tape (T) attached to the battery module (B); and
- further removing the remaining resin (R) by moving the second removal device (504) in a second direction.

11. The method of claim 10, wherein said second direction is a direction perpendicular to the first direction.

## Patentansprüche

1. Automatisches Entfernungssystem (1) zum automatischen Entfernen eines Bands (T) und eines Harzes (R), welche zu einer Außenseite eines Batteriemoduls (B) freigelegt sind, wobei das System (1) umfasst:
eine Entfernungsanordnung (50), welche eine Entfernungsvorrichtung (54, 504) zum Entfernen des Bands (T) und des Harzes (R) umfasst; und
einen automatischen mehrachsigen Roboter (10), welcher mit der Entfernungsanordnung (50) gekoppelt und dazu eingerichtet ist, die Entfernungsanordnung (50) anzutreiben, um das Band (T) und das Harz (R) von dem Batteriemodul (B) zu entfernen,
wobei die Entfernungsanordnung (50) eine erste Entfernungsvorrichtung (54) zum Entfernen des Bands (T) und des Harzes (R) umfasst, welches an dem Band (T) angebracht ist,
wobei die Entfernungsanordnung (50) ferner eine zweite Entfernungsvorrichtung (504) zum Entfernen des Harzes (R) umfasst, welches an dem Batteriemodul (B) verbleibt, welches von der ersten Entfernungsvorrichtung (54) zurückgelassen wird, **dadurch gekennzeichnet, dass**
die erste Entfernungsvorrichtung (54) Stangen (54a) umfasst, welche Seite an Seite entlang einer Seite einer Basis (52) der Entfernungsanordnung (50) angeordnet sind, und sich jede der Stangen (54a) nach unten erstreckt, sowie einen Greifer (54b), welcher integral an einem vorderen Ende von jeder der Stangen (54a) gebildet ist, und
die zweite Entfernungsvorrichtung (504) eine Trageklammer (502) oder einen Block (510) umfasst, welche/r an einer zweiten Seite der Entfernungsvorrichtung gegenüber einer ersten Seite gebildet ist, in welcher die Entfernungsvorrichtung (54) angeordnet ist, sowie ein Messer oder einen Schaber (512), welches/r an der Trageklammer (502) oder dem Block (510) installiert ist, um das Harz (R) zu entfernen.

2. System (1) nach Anspruch 1, ferner umfassend ein Transfermodul (40) und einen Transferschlitten (20),
wobei das Transfermodul (40) dazu eingerichtet ist, das Batteriemodul (B) zu greifen und es zu dem Transferschlitten (20) zu bewegen.

3. System (1) nach Anspruch 2, wobei der Transferschlitten (20) ein Paar von Transferschienen (22) umfasst, welche benachbart zueinander sind, und
wobei das System ferner eine Ausrichteinheit (30) umfasst, welche in einer vorderen Seite der Transferschiene (22) positioniert ist, so dass in Verwendung das von dem Transfermodul (40) zu dem Transferschlitten (20) bewegte Batteriemodul (B) an dem Paar von Transferschienen (22) geladen ist und zu der Ausrichteinheit (30) bewegt wird.

4. System (1) nach Anspruch 3, wobei die Ausrichteinheit (30) einen Stopper (32) und ein Paar von Presselementen (34) umfasst, welche jeweils an äußeren Seiten des Paars von Transferschienen (22) installiert sind,
wobei jedes der Presselemente (34) eine Pressstange (36) umfasst, welche dazu eingerichtet ist, in eine Innenseite einer entsprechenden Transferschiene (22) einzutreten oder sich von der entsprechenden Transferschiene (22) zurückzuziehen, so dass in Verwendung die Pressstange (36) eine Seitenfläche oder eine hintere Fläche des Batteriemoduls (B) presst, wenn die Pressstange (36) in die Innenseite der entsprechenden Transferschiene (22) eintritt, und der Stopper (32) eine Bewegung des Batteriemoduls (B) nach vorne blockiert, so dass das Batteriemodul (B) an seinem Platz fixiert ist.

5. System nach Anspruch 1, ferner umfassend Sprühdüsen (62), welche dazu eingerichtet sind, Hochdruckluft zu sprühen, so dass in Verwendung komprimierte Luft, welche von den Sprühdüsen (62) abgegeben wird, einen Teil des Bands (T) dazu veranlasst, von einem Gehäuse des Batteriemoduls (B) abgelöst und in eine vorbestimmte Richtung gerichtet zu werden, so dass die erste Entfernungsvorrichtung (54) der Entfernungsanordnung (50) das Band (T) ergreift.

6. System (1) nach Anspruch 1, ferner umfassend eine Reinigungseinheit (72), welche dazu eingerichtet ist, die zweite Entfernungsvorrichtung (504) zu kontaktieren und das verbleibende Harz (R) zu entfernen, welches an der zweiten Entfernungsvorrichtung (504) anhaftet.

7. System (1) nach Anspruch 1, ferner umfassend eine Sammeleinheit (80), welche dazu eingerichtet ist, das Band (T) einzusammeln, welches an der ersten Entfernungsvorrichtung (54) angebracht ist.

8. System (1) nach Anspruch 1, wobei die erste Entfernungsvorrichtung (54) Blöcke (510) umfasst, welche entlang einer Seite einer Basis (52) der Entfernungsanordnung (50) angeordnet sind, um zu einer unteren Fläche zu weisen, sowie einen Schaber (512), welcher an einer unteren Fläche der Blöcke (510) montiert und dazu eingerichtet ist, das Band (T) und das Harz (R) zu entfernen.

9. System (1) nach Anspruch 1, wobei der automatische mehrachsige Roboter (10) eine Mehrgelenk-Struktur aufweist, welche einen Körper (120), einen ersten Roboterarm (108), welcher mit dem Körper (120) verbunden ist, und einen zweiten Roboterarm (102) umfasst, welcher mit dem ersten Roboterarm (108) verbunden ist, wobei ein schwenkbarer Antriebsarm (104) und ein Kopplungsabschnitt (106) zum Gekoppeltwerden mit einer Basis (52) der Entfernungsanordnung (50) sequentiell an einem vorderen Ende des zweiten Roboterarms (102) gebildet sind.

10. Verfahren eines automatischen Entfernens eines Bands (T) und von Harz (R), welche an der Außenseite eines Batteriemoduls (B) freigelegt sind, unter Verwendung des automatischen Entfernungssystems (1) nach Anspruch 1, wobei das Verfahren umfasst:
Entfernen des Bands (T) und des Harzes (R), welches an dem Band (T) angebracht ist, durch Bewegen der ersten Entfernungsvorrichtung (54) entlang einer ersten Richtung des Bands (T), welches an dem Batteriemodul (B) angebracht ist; und
Entfernen des verbleibenden Harzes (R) durch Bewegen der zweiten Entfernungsvorrichtung (504) in einer zweiten Richtung.

11. Verfahren nach Anspruch 10, wobei die zweite Richtung eine Richtung senkrecht zu der ersten Richtung ist.

## Revendications

1. Système de retrait automatique (1) pour retirer automatiquement un ruban (T) et une résine (R) exposés à l'extérieur d'un module de batterie (B), le système (1) comprenant :
un ensemble de retrait (50) comportant un dispositif de retrait (54, 504) pour retirer le ruban (T) et la résine (R) ; et
un robot automatique multiaxes (10) accouplé à l'ensemble de retrait (50) et configuré pour entraîner l'ensemble de retrait (50) pour retirer le ruban (T) et la résine (R) du module de batterie (B),
dans lequel l'ensemble de retrait (50) comporte un premier dispositif de retrait (54) pour retirer le ruban (T) et la résine (R) fixée au ruban (T),
dans lequel l'ensemble de retrait (50) comporte en outre un deuxième dispositif de retrait (504) pour retirer la résine (R) restante sur le module de batterie (B) laissée par le premier dispositif de retrait (54),
**caractérisé en ce que**
le premier dispositif de retrait (54) comporte des tiges (54a) agencées côte à côte le long d'un côté d'une base (52) de l'ensemble de retrait (50) et chacune des tiges (54a) s'étendant vers le bas, et un préhenseur (54b) formé d'une seule pièce à une extrémité avant de chacune des tiges (54a), et
le deuxième dispositif de retrait (504) comporte un support (502) ou bloc (510) formé sur un deuxième côté du dispositif de retrait opposé à un premier côté dans lequel le premier dispositif de retrait (54) est agencé, et un couteau ou racleur (512) installé sur le support (502) ou bloc (510) pour retirer la résine (R).

2. Système (1) selon la revendication 1, comprenant en outre un module de transfert (40) et une navette de transfert (20),
dans lequel le module de transfert (40) est configuré pour saisir le module de batterie (B) et pour le déplacer vers la navette de transfert (20).

3. Système (1) selon la revendication 2, dans lequel la navette de transfert (20) comporte une paire de rails de transfert (22) qui sont adjacents les uns aux autres, et dans lequel le système comprend en outre un aligneur (30) positionné dans un côté avant du rail de transfert (22), de sorte qu'en utilisation, le module de batterie (B) déplacé par le module de transfert (40) vers la navette de transfert (20) est chargé sur la paire de rails de transfert (22) et est déplacé vers l'aligneur (30).

4. Système (1) selon la revendication 3, dans lequel l'aligneur (30) comporte une butée (32), et une paire de presseurs (34) respectivement installés sur les côtés extérieurs de la paire de rails de transfert (22),
dans lequel chacun des presseurs (34) comporte une tige de pression (36) configurée pour entrer à l'intérieur d'un rail de transfert (22) respectif ou pour se rétracter du rail de transfert (22) respectif, de sorte qu'en utilisation, la tige de pression (36) appuie sur une surface latérale ou une surface arrière du module de batterie (B) lorsque la tige de pression (36) entre à l'intérieur du rail de transfert (22) respectif, et la butée (32) bloque un mouvement vers l'avant du module de batterie (B), de sorte que le module de batterie (B) est fixé en place.

5. Système selon la revendication 1, comprenant en outre des buses de pulvérisation (62) agencées pour pulvériser de l'air haute pression, de sorte qu'en utilisation, l'air comprimé déchargé des buses de pulvérisation (62) amène une partie du ruban (T) à être séparée d'un boîtier du module de batterie (B) et orientée dans une direction prédéterminée, de sorte que le premier dispositif de retrait (54) de l'ensemble de retrait (50) saisisse le ruban (T).

6. Système (1) selon la revendication 1, comprenant en outre un nettoyant (72) configuré pour entrer en contact avec le deuxième dispositif de retrait (504) et retirer la résine (R) restante adhérant au deuxième dispositif de retrait (504).

7. Système (1) selon la revendication 1, comprenant en outre un collecteur (80) configuré pour collecter le ruban (T) fixé au premier dispositif de retrait (54).

8. Système (1) selon la revendication 1, dans lequel le premier dispositif de retrait (54) comporte des blocs (510) agencés le long d'un côté d'une base (52) de l'ensemble de retrait (50) pour faire face à une surface inférieure, et un racleur (512) monté sur une surface inférieure des blocs (510) et configuré pour retirer le ruban (T) et la résine (R).

9. Système (1) selon la revendication 1, dans lequel le robot automatique multiaxes (10) présente une structure multiarticulations comportant un corps (120), un premier bras de robot (108) relié au corps (120), et un deuxième bras de robot (102) relié au premier bras de robot (108), dans lequel un bras d'entraînement (104) pivotant et une partie d'accouplement (106) pour être accouplés à une base (52) de l'ensemble de retrait (50) sont formés séquentiellement à une extrémité avant du deuxième bras de robot (102).

10. Procédé de retrait automatique de ruban (T) et de résine (R) exposés à l'extérieur d'un module de batterie (B) à l'aide du système de retrait automatique (1) selon la revendication 1, le procédé comprenant :
le retrait du ruban (T) et de la résine (R) fixée au ruban (T) par déplacement du premier dispositif de retrait (54) le long d'une première direction du ruban (T) fixé au module de batterie (B) ; et en outre le retrait de la résine (R) restante par déplacement du deuxième dispositif de retrait (504) dans une deuxième direction.

11. Procédé selon la revendication 10, dans lequel ladite deuxième direction est une direction perpendiculaire à la première direction.
